Europäisches Patentamt

European Patent Office

Office européen des brevets

(19)

(11) **EP 1 580 253 A1**

(12) **EUROPEAN PATENT APPLICATION**

(43) Date of publication:
**28.09.2005 Bulletin 2005/39**

(51) Int Cl.⁷: **C10J 3/66**, C10J 3/78

(21) Application number: **05006436.9**

(22) Date of filing: **23.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **23.03.2004 JP 2004085108**<br>**17.06.2004 JP 2004180122**<br><br>(71) Applicant: **CENTRAL RESEARCH INSTITUTE OF ELECTRIC POWER INDUSTRY**<br>**Tokyo (JP)**<br><br>(72) Inventors:<br>• **Ichikawa,Kazuyoshi c/o Yokosuka ResearchLaboratory**<br>**Yokosuka -shi Kanagawa ken (JP)** | • **Inumaru,Jun c/o Yokosuka Resarch Laboratory**<br>**Yokosuka-shi Kanagawa ken (JP)**<br>• **Kidoguchi,Kazuhiro c/o Yokosuka Resarch Laboratory**<br>**Yokosuka-shi Kanagawa ken (JP)**<br>• **Hara,Saburo c/o Engineering Research Laboratory**<br>**Yokosuka-shi Kanagawa ken (JP)**<br>• **Hara Saburo c/oEngineering Research Laboratory**<br>**Yokosuka-shi Kanagawa ken (JP)**<br>• **Kanai Masao**<br>**Yokohama-shi Kanagawa-ken (JP)**<br><br>(74) Representative: **Hoarton, Lloyd Douglas Charles**<br>**Forrester & Boehmert,**<br>**Pettenkoferstrasse 20-22**<br>**80336 München (DE)** |

(54) **Carbonization and gasification of biomass and power generation system**

(57)      Biomass (1), including waste biomass, is gasified by a process in which the biomass (1) is first carbonized (2), and the char (4) and pyrolysis gas (3) from the carbonizer (2) are respectively fed to a high temperature gasifying part (8) and a gas reformer part (9) of a two-stage gasifier. A gasifying agent (5) is continuously fed to the gasifying part, and intermittently fed (6) to the gas reformer, to maintain the temperature required to avoid tar formation in the gas reformer stage. Multiple carbonization chambers are operated in rotation. When the carbonization/gasification apparatus is used to provide fuel to an electric power generator set, exhaust heat from the generator power plant is fed back to the carbonizer, and can be supplemented by exchange of heat from the gas delivered to generator power plant from the outlet of the gasifier.

Fig. 1

**Description**

FIELD OF THE INVENTION

This invention relates to the generation of gas by carbonization and gasification of biomass, and to the efficient generation of power using biomass as a source of energy.

BACKGROUND OF THE INVENTION

The term "biomass" as used herein, means a material which includes a substantial quantity of matter derived from living organisms. Biomass may include, for example, agricultural waste, forestry waste, municipal waste, building material waste, waste generated in food production, waste treatment sludge, and the like, and mixtures of such materials. A biomass may include some inorganic matter, and may also include significant quantities of organic materials that are more remotely related to living organisms, such as waste plastics.

A technology for carbonization and gasification, already in widespread use, is described in Japanese patent application No. 35837/2004. In this technology, carbonized material (char) is produced in a carbonization chamber, and introduced into a gasifier, where it is converted to a gas by the use of air and steam. The carbonizing step removes water from the raw fuel while leaving a suitable amount of volatile matter in the carbonized material, and thereby improves the efficiency of the gasification step.

Another system has been proposed, in which biomass is fed directly to a gasifier, by a screw feeder for example, without preliminary carbonization, and air or oxygen, and steam are introduced into a reformer installed on the downstream side of the gasifier in order to decompose tar produced in the gasifier. This system is described in Japanese patent application No. 326241/2003.

In conventional carbonization/gasification technology, high gasification efficiency is realized because the carbonized material fed to the gasifier has a very low water content. On the other hand, the overall efficiency of conventional gasification/carbonization technology is low because a significant quantity of energy is utilized in the carbonization process, and heat and combustible pyrolysis gas, obtained as by-products of the carbonization process are released without being utilized.

Where gasification is carried out by directly introducing biomass into a gasifier without preliminary carbonization, the temperature inside the gasifier remains in the range from about 600°C to 1000°C because of the high water content in the biomass. As a result, tar is often produced, and the tar adheres to piping, causing inefficient operation and requiring countermeasures such as decomposition of the tar by steam. Especially in the case where the fuel consists of a mixture of various kinds of biomass, it is difficult to decompose the tar using steam, which is typically at a temperature in the range from 400°C to 450°C. As a result, there the adhering tar must be removed in a separate step using a suitable cleansing device. Removal of the tar, necessarily removes carbon and hydrogen contained therein, and consequently part of the total heating value of the gas produced by the gasifier is lost in the tar removal process. Tar can also be decomposed by the use of oxygen, but this process also results in a reduction of the heating value of the generated gas.

An object of the invention, therefore, is to provide for more efficient carbonization and gasification of biomass, by reduction of energy lost through discharge of pyrolysis gas in the carbonization process, and reduction in the deterioration of the heating value of the generated gas due to the formation of tar.

Presently-available power generation systems having a capacity on the order of 1 megawatt, in which wood-based biomass such as timber, and waste based biomass, such as municipal solid waste, refuse, waste plastics and the like are used as fuel for a boiler, have a power generation efficiency of about 10% at best. Improved power generation efficiency of biomass-based power generation systems can be realized. A rotary kiln, as described in Japanese patent application No. 253274/2003, developed as a waste disposal apparatus, and a fluidized-bed furnace as described in Japanese patent application No. 160141/1998, have been adapted for use in biomass power generation systems as described. Technology for gasifying char produced in a carbonization chamber has also been disclosed, for example, in Japanese patent application No. No. 275732/2003. In this case, the drying and carbonization of raw material is carried out in a carbonization chamber using a supplementary fuel such as kerosene, heavy oil, and so forth.

In addition to the problems of low efficiency, and tar removal referred to above, since combustion is carried out at intermediate to low temperatures, there is also a possibility of dioxin generation, which is a serious environmental problem. Moreover, ash is discharged in powdery form. Consequently, in the handling of waste ash, which is typically transported for disposal in landfills, countermeasures against elution of heavy metals and other detrimental constituents of the ash are required, especially where the ash results from waste based biomass, such as refuse and municipal solid waste. In such a case, the waste ash can be melted and converted to slag in a separate melting device.

An entrained flow gasifier, operated at a temperature of at least 1100EC so that no tar is formed, is capable of converting ash into molten slag. An entrained flow gasifier has been in the development stage for gasification of coal, and is expected to avoid the problem of tar adhesion. However, in the case of the entrained flow coal gasifier, the coal must be rendered into fine particles, for example particle having a grain size of around 100 μm. Biomass such as wood-based biomass, and waste based biomass, cannot be handled as it is, and is not easily processed. Accordingly, if biomass were to be gasified in such an apparatus, it would need to be processed using a separate device, thereby requiring a costly increase in plant scale.

Wood-based biomass can be used by itself as fuel. However, it is difficult to secure such a fuel reliably and consistently because the quantity of wood-based biomass that is available varies seasonally and is susceptible to variations in weather. Consequently, wood-based biomass has a high collection cost and is not cost-efficient when used by itself as a fuel. In addition, because of the difficulty of collecting the required quantity of wood-based biomass, expansion of the scale of power generation equipment is difficult to achieve, and it is difficult to use wood-based biomass to implement high-efficiency power generation.

Another object of the invention, therefore, is to provide a biomass power generation system which has high thermal efficiency and power generation efficiency, and which is capable of stably generating power by carbonization, combustion, and gasification, where the raw material to be processed includes not only wood-based biomass, but also waste-based biomass such as municipal solid waste.

BRIEF SUMMARY OF THE INVENTION

Using calculation software for prediction of gasification performance, we have conducted a study on two different processes: a "one-stage charge process," in which intermediate products, namely, carbonized material and combustible pyrolysis gas, are charged into a gasifier, and a "two-stage charge process, " in which the intermediate products are respectively fed into a high-temperature gasification part (a combustor) and a gas reformer (a reductor), constituting two separate stages of a two-stage gasifier.

In the two-stage charge processes, that is, the process utilizing the two-stage gasifier, a gasifying agent (air or oxygen) can be fed into the high-temperature gasification part only. The total oxygen ratio can be controllably maintained at a low level, and gasification can be effected at high thermal efficiency, using only a small quantity of gasifying agent.

In the two-stage charge process, however, the temperature at the outlet of the gasifier (that is, the outlet of the gas reformer) undergoes a change depending on an amount of the combustible pyrolysis gas generated in the carbonization chamber. If the flow rate of the combustible pyrolysis gas increases, the temperature at the outlet drops, and there is a risk that tar will be formed. To avoid the formation of tar, it is desirable to maintain the temperature at the outlet of the gasifier at a level not lower than a predetermined minimum temperature.

As a result of our study, we have determined that the problem of tar formation in the two-stage charge process can be avoided without impairing desirable features of the two-stage charge process.

In a preferred biomass carbonizing-gasifying system and process in accordance with the invention, biomass fuel is heated in a carbonization chamber to produce a carbonized material. The system and process utilize a two-stage gasifier, comprising a high-temperature gasification part for gasifying the carbonized material, and a gas reformer for reforming combustible pyrolysis gas containing tar volatilized in the production of the carbonized material. Feeding means are provided for transferring the carbonized material produced in the carbonization chamber to the high-temperature gasification part of the two-stage gasifier. A pyrolysis gas flow path is also provided for sending the combustible pyrolysis gas produced in the carbonization chamber into the gas reformer of the gasifier. Gasifying agent feed means introduce a gasifying agent to the high-temperature gasification part of the gasifier, and also controllably feed a gasifying agent containing oxygen to the gas reformer so that the temperature at the outlet of the gasifier can be prevented from falling below a predetermined temperature, preferably 1100°C.

Especially in the case where the biomass is low in fixed carbon content, the ratio of a pyrolysis gas, produced as a by-product in the carbonizer, relative to the amount of carbonized material obtained from carbonization is high, the rate of flow of pyrolysis gas, becomes high in relation to the rate of flow of high-temperature gas from the high-temperature gasification part to the reformer. The pyrolysis gas is typically at a temperature in a range from 400 to 600°C, while the gas from the gasification part is typically at a temperature typically of at least 1500°C, a rapid drop in temperature can occurs in the gas reformer.

If gasifying agent is fed to the gas reformer, as well as to the high-temperature gasification part, when the flow rate of combustible pyrolysis gas increases, a burning reaction between the gasifying agent and the combustible pyrolysis gas occurs. The burning of pyrolysis gas, which may be referred to as "re-burning" or "after-burning," prevents a drop in gas temperature below a predetermined minimum, and is effective to prevent tar formation without impairing the desirable features of the two-stage charge process, especially its low consumption of gasifying agent.

Preferably, the gasifying agent feed means intermittently feeds gasifying agent containing oxygen to the gas reformer, and comprises pipes, arranged to feed a gasifying agent containing oxygen both to the high-temperature gasification part, and to the gas reformer. When the system is so equipped, the feed of gasifying agent can be selectably switched over depending on conditions inside the gasifier. Thus, when the carbonizing-gasifying system is operating normally, gasifying agent may be fed only to the high-temperature gasification part. However, if the temperature at the outlet of the gasifier drops to a predetermined temperature, or the risk of occurrence of such an event is detected, either by observation or by automatic sensing equipment, gasifying agent may be fed to the gas reformer as well as to the high-temperature gasification part, thereby avoiding conditions under which tar is formed.

With the biomass carbonizing-gasifying system in accordance with the invention, the carbonized material (char) produced in the carbonization chamber, is charged, as a fuel, into the high-temperature gasification part of the gasifier. Concurrently, air or oxygen, as a gasifying agent, is charged into the high-temperature gasification part. The water content of the carbonized material is removed in the carbonization treatment, and consequently the atmosphere in the high-temperature gasification part of the gasifier can be maintained at a high temperature, e.g., 1500°C or greater, which is well in excess of 1100°C, the decomposition temperature of tar. On the other hand, the combustible pyrolysis gas, produced as a by-product in the carbonization chamber and charged into the gas reformer, contains water, and the water content of the pyrolysis gas enhances gasification efficiency, relative to the total quantity of the biomass charged into the carbonization chamber, so that a gas high in heating value and without a tar content, is efficiently generated.

In summary, the invention effectively prevents tar formation at the outlet of the gasifier without impairing the advantages of the two-stage charge process. There is no tar in the generated gas, and consequently no deterioration in the heating value of the generated gas due to tar content. Furthermore, there is no need to use auxiliary equipment to cleanse tar adhering to piping, or to decompose tar by the use of oxygen, which also contributes to, deterioration in the heating value of the generated gas. Since the combustible pyrolysis gas produced as a by-product in the carbonization chamber is utilized, high gasification efficiency can be achieved in comparison with that of a conventional carbonizing-gasifying system. Where the gasifying agent is fed to the high-temperature gasification part, and the gas reformer, by a single gasifying agent feed device, through branched pipes, advantages in terms of system miniaturization, and reduction in cost can be realized.

In addition to studying the performance of carbonization-gasifying systems, we have also focused attention on the efficient generation of electric power, using gas engines, gas turbines, and fuel cells, and on the efficient utilization of exhaust heat emitted in the operation of such equipment, when operated on gaseous fuel derived from wood based biomass, and from waste-based biomass, such as municipal solid waste, or waste plastics.

For biomass power generation, the system in accordance with the invention comprises a generator set, operated by a gaseous fuel, and releasing exhaust heat in its operation, a carbonizer for receiving biomass, and receiving exhaust heat released by the generator set and utilizing the exhaust heat for pyrolytically decomposing and carbonizing biomass and producing char and pyrolysis gas containing volatilized tar. The power generation system also includes a gasifier, which is preferably a two stage gasifier as described above. The gasifier receives char and pyrolysis gas from said carbonizer. In the gasifier, combustion and gasification of the char takes place, and the pyrolysis gas containing tar is reformed, so that the gasifier thereby generates a gaseous fuel by which the generator set is operated.

The power generation system preferably comprises a heat exchanger arranged to transfer part of the heat of the gaseous fuel generated by the gasifier to the exhaust heat released by the generator set, so that the heat used for carbonization of biomass in the carbonizer comprises not only the exhaust heat from the generator set, but also heat from the gaseous fuel generated by the gasifier.

In the biomass power generation system, the carbonizer also preferably comprises plural carbonization chambers, operable in rotation. That is, one carbonization chamber is operated for a first time interval to effect carbonization and pyrolysis gas delivery while char is fed to the gasifier from a second carbonization chamber. Thereafter, the second chamber is recharged with biomass, and the functions of the carbonization chambers are interchanged. That is, carbonization and pyrolysis gas generation take place in the second carbonization chamber while char is fed from the first chamber. Three or more carbonizers can be operated in rotation in a similar manner. In addition, in the power generation system, ash from the volatilized tar is preferably melted in the gasifier and converted into slag.

With the biomass power generation system according to the invention high-efficiency power generation can be implemented, without the use of a supplementary fuel, by integrating the carbonizing process, which utilizes generator exhaust heat, with the gasifying process.

The power generation system in accordance with the invention preferably also takes advantage of the two-stage charge gasification process as described above.

The exhaust heat emitted by the generator set is preferably kept at a high temperature in a range of about 600 to 700°C, and is directly or indirectly fed to the carbonization chamber. This heat is efficiently utilized in the pyrolytic decomposition and carbonization of biomass, without use of supplementary fuel. Accordingly, the overall thermal efficiency of the system is high, since there is no need for supplementary fuel as in the case of a conventional system, and the system is preferable in terms of environmental impact.

Not only is system exhaust heat utilized effectively in the carbonization chamber, but the biomass fuel is subjected to pyrolysis and stirring when passing through the carbonization chamber, thereby being converted into a fine powdery material. Furthermore, if the exhaust heat supplied to the carbonization chamber is kept at a temperature in the range of about 600 to 700°C, it will vaporize the water content of the biomass fuel sufficiently to produce a carbonized fuel which has little water content and which is high in heating value.

The temperature of the char inside the carbonization chamber is preferably maintained in the range from about 500 to 600°C, and a high-quality carbonized fuel is produced. However, even though the biomass fuel is turned into fine powdery form as described above, uniform pulverization of the biomass fuel is difficult to implement. Thus, the biomass fuel, although in fine powdery form, will exhibit a grain distribution to some extent. Yet it is possible to effect sufficient pulverization to avoid problems in carrying out gasification. The carbonization chamber of the system carries out drying, crushing, and carbonization, and consequently a separate crusher is unnecessary.

In the gasifier, combustion, and gasification of the high-quality char obtained from the carbonization chamber raise the in-furnace temperature of the gasifier to a temperature at least as high as the decomposition temperature of tar, and the problem of adhesion of tar to piping is avoided, eliminating the need for cleaning or auxiliary tar removal equipment. Furthermore, when the in-furnace temperature of the gasifier, is maintained at such a high level, the production of dioxin is also avoided. In addition, since there is no need for decomposing the tar by use of steam activation and oxygen, deterioration in the heating value of the gas used as fuel for the generator set is avoided, and overall system efficiency is enhanced.

Because of the high temperature of the gasifier, it becomes possible to melt ash, converting it into slag form with little risk of elution of heavy metals before being discharged. Thus it is possible to utilized waste-based biomass as fuel, and there is no need for slagging ash in a separate device. It follows that, with the present invention, wood-based biomass, mixed with waste-based biomass can be utilized as fuel, and collection of adequate quantities of biomass fuel becomes less susceptible to changes of season and variations in weather. Saving of expense, and in time and effort required for collection of biomass fuel can be reduced significantly. There are, of course, other economic advantages in the utilization of waste-based biomass, such as municipal solid waste, waste plastics, and the like in comparison with the utilization of wood-based biomass alone, which generally has a higher collection cost. In addition to the fact that power output can be stabilized as a result of the use of waste-based biomass in addition to wood-based biomass, the invention also makes it easier to expand the scale of a power generation plant, and thereby realize greater efficiency in power generation.

Moreover, there are significant ecological advantages in the melting of ash into slag.

With the biomass power generation system according to the invention, improved efficiency and saving of space can both be realized by the use of equipment that has not existed previously: a gasifier capable of concurrently gasifying char, decomposing tar, and melting ash into slag. The invention also has the advantage of handling wood-based biomass, and waste-based biomass regardless of their grindability, making it unnecessary to pulverize fuel in a separate crusher. As a result, the overall size of the power generation system, and its total cost, can be kept small.

With the biomass power generation system in accordance with the invention, there is no longer the need for concern about the elution of deleterious constituents of ash, and countermeasures against the risk of the elution are no longer needed. In the case of waste containing, for example, 5% or more ash, it is necessary to convert the ash into slag to avoid detrimental environmental impact. Conversion of ash into slag is easily carried out in the biomass power generation system according to the invention. It is unnecessary to utilize cedar chips or the like, containing, for example, about 1% ash, in order to creating a high-temperature condition. With the invention, relatively small amounts of ash can be discharged from the outlet of the gasifier in the form of fly ash together with the generated gas, and the ash can be arrested in a gas purifier installed downstream of the gasifier stage. With the biomass power generation system according to the invention, a choice can be made between operation in which ash is melted, and operation with no melting of ash, depending on the ash content of the biomass fuel, even though the same furnace is in use in both cases.

With the biomass power generation system, heat from the generated gas from the gasifier can also be recovered along with the exhaust heat from the generator set for use in operation of the carbonization chamber. Consequently, the carbonization chamber can be operated at a high temperature, and with high thermal efficiency.

Improved operation can be achieved by utilizing plural carbonization chambers, and operating them in rotation to feed char and the pyrolysis gas continuously to the gasifier.

BRIEF DESCRIPTION OF THE DRAWINGS

FIG. 1 is a schematic view showing a configuration of a biomass carbonizing-gasifying system according to the invention;

FIG. 2 is a graph comparing calculated values and values from the results of gasification tests on oil emulsion (oxygen ratio at 0.40);

FIG. 3 is a graph showing predictions of the gasifying performance of an oxygen-blown type, one-stage, entrained flow gasifier (input temperature of a gasifying agent: 50°C), indicating variation in carbon conversion efficiency and the temperature at the outlet of the gasifier while the oxygen ratio is varied;

FIG. 4 is a graph showing predictions of the gasifying performance of the oxygen-blown type, one-stage, entrained flow gasifier (input temperature of a gasifying agent: 50°C), indicating variation in generated gas ratio and cold gas efficiency while the oxygen ratio is varied;

FIG. 5 is a graph showing predictions of the gasifying performance of an air-blown type, one-stage, entrained flow gasifier (air input temperature: 250°C), indicating variation in carbon conversion efficiency, and temperature at the outlet of the gasifier while the oxygen ratio is varied;

FIG. 6 is a graph showing predictions of the gasifying performance of an oxygen-blown, one-stage charge process, indicating the variation in carbon conversion efficiency and temperature at the outlet of the gasifier, while the oxygen ratio is varied;

FIG. 7 is a graph showing predictions of the gasifying performance of the oxygen-blown one-stage charge process, indicating variation in generated gas ratio and cold gas efficiency while the oxygen ratio is varied;

FIG. 8 is a graph showing prediction of the gasifying performance of an air-blown, one-stage charge process, indicating variation in carbon conversion efficiency and temperature at the outlet of the gasifier while the oxygen ratio is varied;

FIG. 9 is a graph showing predictions of the gasifying performance of the air-blown, one-stage charge process, indicating variation in generated gas ratio and cold gas efficiency while the oxygen ratio is varied;

FIG. 10 is a graph showing predictions of the gasifying performance of an air-blown, two-stage charge process, indicating variation in carbon conversion efficiency, combustor outlet temperature, and temperature at the outlet of the gasifier, while the oxygen ratio is varied;

FIG. 11 is a graph showing prediction on the gasifying performance of the air-blown two-stage charge process, indicating variation in generated gas ratio and cold gas efficiency while the oxygen ratio is varied;

FIG. 12 is a graph showing predictions of the gasifying performance of a process of air charge to a gas reformer (combustor oxygen ratio: 0.64), indicating variations in carbon conversion efficiency, combustor outlet temperature, and temperature at the outlet of the gasifier, while the oxygen ratio is varied;

FIG. 13 is a graph showing the effect of combustor oxygen ratio (overall oxygen ratio: 0.20) on gasifying performance, indicating variations in carbon conversion efficiency, combustor outlet temperature, and temperature at the outlet of the gasifier, while the oxygen ratio is varied;

FIG. 14 is a graph showing the effect of combustor oxygen ratio (overall oxygen ratio: 0.20) on gasifying performance, indicating variation in generated gas ratio and cold gas efficiency while the oxygen ratio is varied;

FIG. 15 is a graph showing predictions of the gasifying performance of a two-stage charge process for waste, indicating variations in carbon conversion efficiency, combustor outlet temperature, and temperature at the outlet of the gasifier, while the oxygen ratio is varied;

FIG. 16 is a graph showing prediction of the gasifying performance of the two-stage charge process for waste, indicating variations in generated gas ratio and cold gas efficiency while the oxygen ratio is varied;

FIG. 17 is a simplified schematic diagram showing the configuration of a biomass power generation system according to an embodiment of the invention; and

FIG. 18 is a perspective view of a power generation system in accordance with the invention, in which plural, sequentially operable, carbonization chambers are disposed around a single gasifier.

DETAILED DESCRIPTION OF THE PREFERRED EMBODIMENT

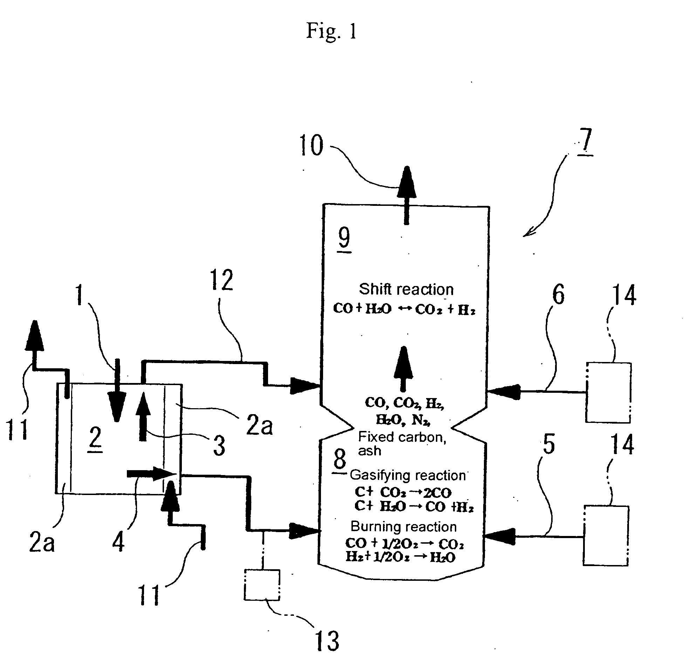

The embodiment of the invention shown in FIG. 1 is a biomass carbonizing-gasifying system for pyrolytically decomposing a biomass fuel 1, such as wood-based biomass, waste-based biomass including municipal solid waste, and mixtures of such biomasses. The biomass carbonizing-gasifying system comprises a carbonization chamber 2 for receiving and heating biomass fuel 1 to produce a carbonized material 4, a two-stage gasifier 7 composed of a high-temperature gasification part 8 for gasifying the carbonized material 4, and a gas reformer 9 for reforming combustible pyrolysis gas 3, a carbonized material feeder 13 for feeding the carbonized material 4 to the high-temperature gasification part 8 of the gasifier 7, a pyrolysis gas flow path 12 for sending the combustible pyrolysis gas 3 into the gas reformer 9 of the gasifier 7, and gasifying agent feed means 14 for feeding a gasifying agent 5 to the high-temperature gasification part 8 of the gasifier, and feeding a gasifying agent 6, containing oxygen, to the gas reformer 9.

The pyrolysis gas 3 contains tar volatilized in the process of producing the carbonized material 4. This volatilized tar will form tar deposits on piping unless the temperature at the outlet 10 of the gasifier is kept above a predetermined temperature. In normal operation, the gasifying agent 5 is continuously fed to the high temperature gasification part 8. However, the gasifying agent 6 is fed to the gas reformer 9 only when the temperature at the outlet 10 of the gasifier 7 drops to a predetermined temperature, or when there is a risk that the temperature will drop to that predetermined temperature.

The biomass fuel 1 has a high water content and poor grindability, which make the raw biomass fuel unsuitable for treatment by an entrained flow gasifier. Accordingly, in the embodiment shown in FIG. 1, there is adopted a carbonizing-gasifying process in which the biomass fuel 1 is separated into a volatile, combustible, pyrolysis gas 3 and carbonized material 4, inside the carbonization chamber 2 before being charged into the gasifier 7. The gas 3 contains the water content of the biomass fuel 1 and volatile matter, and the carbonized material 4 is composed mainly of fixed carbon and ash.

The carbonization chamber 2 comprises an inner part for pyrolytically decomposing the biomass fuel 1, surrounded by a jacket 2a, into which a gas 11 is introduced at a temperature preferably around 600°C for indirectly heating the biomass fuel 1 and effecting carbonization through evaporation of its water content, and pyrolysis of organic substances under anaerobic conditions, the content of the chamber 2 being cut off from outside air. As will be described later, the carbonization treatment of the biomass fuel can be carried out by utilizing exhaust heat from a gas engine, gas turbine, fuel cell, or other power generating device utilizing gas generated by the gasifier as a fuel. Thus, the gas 11 can be exhaust gas from the power generating device.

The water content of the biomass, and the combustible pyrolysis gas 3, are continuously discharged from the upper part of the carbonization chamber, and the carbonized material 4 is discharged from the bottom thereof. The water content, and the combustible pyrolysis gas 3, are sent into the gas reformer 9 via the pyrolysis gas flow path 12. The carbonized material 4 is sent into the high-temperature gasification part 8 of the gasifier 7 via the carbonized material feeder 13. The carbonized material feeder 13 can be any suitable feed means, for example, a screw feeder.

The gasifier 7 causes the carbonized material 4 fed from the carbonization chamber 2, and the combustible pyrolysis gas 3 containing water content and volatile matter to undergo a gasifying reaction, thereby producing CO (carbon monoxide), and $H_2$ (hydrogen).

The gasifying agent feed means 14 are capable of being selectably switched between a condition in which the gasifying agent is fed only to the high-temperature gasification part 8, and a condition in which the gasifying agent is fed both to the high-temperature gasification part 8, and to the gas reformer 9. Air or oxygen is fed by the gasifying agent feed means 14, thereby causing a burning reaction to occur in the high-temperature gasification part 8 or in both the high-temperature gasification part 8, and the gas reformer 9. The gasifying agent feed means 14 may be made up of a device for blowing air and suitable piping.

In FIG. 1, two gasifying agent feed means 14 are shown as separate elements for the sake of convenience, and the gasifying agent fed to the high-temperature gasification part 8 is denoted by reference numeral 5 while the gasifying agent fed to the gas reformer 9 is denoted by reference numeral 6. However, the gasifying agent feed means 14 can comprise a single feeder with branched piping and valves such that the gasifying agent (air or oxygen) can be switched over from a condition in which it is fed only to the high temperature gasification part 8, to a condition in which it is fed both to the high-temperature gasification part 8, and the gas reformer 9. Where a single feeder is used with branched feed pipes, a reduction in the overall size of the system, and a reduction in its cost can be realized.

The biomass fuel 1 fed to the carbonization chamber 2 first undergoes indirect pyrolysis at a temperature around, for example, 600°C inside the carbonization chamber 2 for a sufficient length of time to be carbonized. Upon the carbonization of the biomass fuel 1, its water content, and volatile matter, are exhausted from the upper part of the carbonization chamber 2 and transferred to the gas reformer 9 via the pyrolysis gas flow path 12. The time required for pyrolytic decomposition of the biomass fuel 1 is dependent on the kind of raw material, and its water content. As an example, if the temperature is set to around 600°C, carbonization can ordinarily be implemented in about 30 minutes to one hour.

After satisfactory carbonization, the carbonized material 4, containing fixed carbon, ash, and relatively little volatile matter, is discharged from the carbonization chamber 2. Thus, the carbonized material 4 and the volatile gas in the carbonization chamber are fed to the gasifier 7 via different systems,

A gasifying agent 5 is fed to the high-temperature gasification part 8, which is the lower part of the gasifier 7, and combustion and gasification are carried out in the gasification part, using the carbonized material 4 as a fuel.

Since the water content from the biomass has been removed and the of the carbonized material 4 at this stage is relatively free of water, a high-temperature gas a temperature not of 1500°C or more can be generated. Furthermore, in the gas reformer 9, which is the upper part of the gasifier 7, gas reforming is carries out by decomposing tar contained in the pyrolysis gas 3 delivered from the carbonization chamber 2 by the use of the high-temperature gas as a heat source. If the flow rate of the combustible pyrolysis gas 3 (which is typically at temperature in the range of about 400 to 600°C) is high in relation to the flow rate of the carbonized material 4 within the system, the gas from the high-temperature gasification part 8 can undergo a rapid drop in temperature inside the gas reformer 9. The temperature of the gas in reformer 9 should not be allowed to drop to a temperature lower than 1100°C, which is the decomposition temperature of tar. Accordingly, if the temperature drops to 1100°C, or it is determined either by sensing instrumentation or observation that there is an imminent risk of such a temperature drop, gasifying agent 6, containing air or oxygen, is fed into the gas reformer 9, and a portion of the combustible pyrolysis gas 3 is subjected to combustion, thereby raising the temperature of the high-temperature gas to a temperature of at least 1100°C, so that decomposition of the tar can take place.

Reactions inside the gasifier 7 can be expressed by means of simple chemical formulas as follows. The burning reaction in the high-temperature gasification part 8 includes reactions expressed by:

$$(1) \qquad CO + 1/2\ O_2 \rightarrow CO_2$$

and

$$(2) \qquad H_2 + 1/2\ O_2 \rightarrow H_2O$$

while the gasifying reaction includes reactions expressed by

$$(3) \qquad C + CO_2 \rightarrow 2CO$$

and

$$(4) \qquad C + H_2O \rightarrow CO + H_2$$

After the reactions described as above, CO, $CO_2$, $H_2$, $H_2O$ $N_2$, fixed carbon, and ash move from the high-temperature gasification part 8 to the gas reformer 9. Thereafter, in the gas reformer 9, there occurs a shift reaction expressed by

$$(5) \qquad CO + H_2O \longleftrightarrow CO_2 + H_2$$

Ash, resulting from the burning reaction and the gasifying reaction proceeding in the high-temperature gasification part 8, is turned into molten slag, which is taken out of the bottom of the gasifier 7.

Various changes and modifications may be made in the apparatus as described above. For example, as will appear subsequently, plural carbonization chambers may be operated time sequence for continuous feeding of carbonized material and combustible pyrolysis gas to the gasifier. Furthermore, in the gasifier, the high-temperature gasification part and the gas reformer can be provided in one chamber, without a distinct partition therebetween. For example, a single chamber can be used, or a single chamber with a restriction between two parts can be used.

In order to examine a process for gasifying wood-based, and waste-based biomass (which may be referred to as "waste"), the inventors have established calculation techniques for easily predicting gasifying performance on the basis of the properties of fuels, and gasifying reaction rates, and have examined processes for gasifying various kinds of fuels and target ranges for operation conditions, intended for high-efficiency and stable operation.

With a technique for high-precision numerical analysis, targeting at a coal gasifier, and a super-heavy oil gasifier, developed by Electric Utilities Central Research Institute Foundation (hereinafter referred to merely as the "Foundation"), much time is spent in preparing calculation lattices in order to derive detailed results of various performances of the gasifier 7, such as particle behavior, property of gases, distribution of gas temperature, and so forth, and it takes several hours to compute one condition. Accordingly, the Foundation has established a calculation technique capable of easily predicting various gasifying performances, such as carbon conversion efficiency, cold gas efficiency, gas temperature and so forth, on the basis of properties of fuel species as targets, and gasifying reaction rates thereof to enable gasifying processes, optimum operation conditions, and so forth, to be reviewed with ease. With the calculation technique, radiation from the furnace wall of the gasifier 7, particle behavior, the shape of the gasifier 7, and so forth are not taken into account, and it is possible to keep track of the extent to which the reactions occurring to fuel charged into the gasifier 7 have proceeded after the elapse of time on the basis of gasifying reaction rates, and gas phase reaction rate.

The calculation technique as established is broadly described hereinafter. It was assumed that, as to the fuel charged into the gasifier 7, fixed carbon found from property analysis values is coke as the object for gasifying reaction and volatile matter is instantaneously turned into gas due to pyrolysis after charged into the gasifier 7. Further, it was assumed that the water content in the form of $H_2O$ was charged into the gasifier 7 to be associated with water gas reaction and shift reaction.

It is assumed that C, H, and O, as volatile matter, are charged in the form of gas, resulting basically in a shift equilibrium state ($CO + H_2O = CO_2 + H_2$) based on the equilibrium constant (the shift equilibrium constant Ks) shown in the formula for Ks given below. However, if an attempt is made to determine proportions of CO, $CO_2$, $H_2$, and $H_2O$ on the basis of the proportions of C, H, and O in the fuel, O is found insufficient in most cases. Thus, when it was impossible to attain the shift equilibrium state, O was combined with C to form CO, and further, when O was insufficient in relation to C, use was made of O in a gasifying agent. Hydrogen was assumed to be $H_2$.

The initial temperature was determined on the basis of the sensible heats of the fuel, and the gasifying agent (air, oxygen), respectively, and the heating value of the volatile matter when converted into CO, and so forth. Average specific heat capacities at constant pressure (Cpi) of various gases were calculated by making approximations with a sixth order polynomial for gas temperature, as given below.

The formula for Ks is:

$$(6) \qquad Ks = ([CO_2] \times [H_2])) \div ([CO] \times [H_2O])$$

$$= 0.0265 \times \exp(3956) \div (T + 273))$$

where T: is in °C.

The polynomial by which Cpi is approximated is:

$$(7) \qquad Cpi = Ai + BiT + CiT^2 + DiT^3 + EiT^4 + FiT^5 + GiT^6$$

Inside the gasifier 7, four gas phase reactions, expressed by the following formulas are taken into account, but reactions concerning methane, sulfur, and other trace components are not taken into account.

$$(8) \qquad CO + 1/2\, O_2 \rightarrow CO_2$$

$$(9) \qquad H_2 + 1/2\, O_2 \rightarrow H_2O$$

$$(10) \qquad CO + H_2O \rightarrow CO_2 + H_2$$

$$(11) \qquad CO_2 + H_2 \rightarrow CO + H_2O$$

The following table 1shows reaction rate constants using calculations of respective gas phase reactions ("c. f." referring to the numbered chemical formulas above).

TABLE 1

| Formula | A | b | E(J/kmol) |
| --- | --- | --- | --- |
| 8 | $2.2 \times 10^2$ | 0 | $1.67 \times 10^8$ |
| 9 | $0.68 \times 10^{16}$ | -1 | $1.68 \times 10^8$ |
| 10 | $2.75 \times 10^9$ | 0 | $8.38 \times 10^7$ |
| 11 | $2.65 \times 10^{-2}$ | 0 | $3.96 \times 10^3$ |

With respect to the gasifying reaction of the coke, three reactions, expressed by chemical formulas 13 to 15, given below, are taken into account. For gasifying reaction rate constants, values measured by use of a thermobalance and PDTF (super-high temperature pressurized fuel reaction test facility) of the Foundation were adopted. For a coke gasifying reaction rate model, an n-th reaction rate formula, taking into account the effect of temperature and pressure, as expressed by Arrhenius equation 12, was adopted. Table 2 shows values of cedar barks as an example of gasifying reaction rate constants. It is known from studies thus far conducted by the Foundation that gasifying reaction becomes rate-limiting in a high-temperature region. Accordingly, with respect to gasifying reaction by $CO_2$ as expressed by chemical formula 14, respective gasifying reaction rates in low-temperature and high-temperature regions, as shown in Table 2, are compared with each other, thereby adopting smaller values. Further, it is known that the gasifying reaction by $H_2O$, as expressed by chemical formula 15, is faster than the gasifying reaction by $CO_2$ from the studies

thus far conducted by the Foundation, and in this case, the former was assumed to be 1.5 times as fast as the latter.

$$(12) \qquad dx/dt = A_o P_{iexp}^n \; (-E_{Ai}/RT)$$

$$(13) \qquad CO + 1/2 \; O_2 \rightarrow CO$$

$$(14) \qquad C + CO_2 \rightarrow 2CO$$

$$(15) \qquad C + H_2O \rightarrow CO + H_2$$

TABLE 2

| Formula | $A_o$ | n | $E_A$[J/kmol] |
|---|---|---|---|
| 13 | $3.53 \times 10^6$ | 0.68 | $1.30 \times 10^8$ |
| 14 (low temp region) | $3.64 \times 10^{10}$ | 0.49 | $2.77 \times 10^8$ |
| 14 (high temp region) | $4.95 \times 10^6$ | 0.745 | $1.78 \times 10^8$ |

The gasifier 7 was assumed to be constructed of a refractory material, and the ratio of heat loss, caused by dissipation to the furnace wall of the gasifier 7, was found by use of a relationship between gas temperature at the outlet of the gasifier 7, and a ratio of heat loss to heat input quantity, shown in the expression below, found when gasification tests on oil emulsion and residual oil were conducted at the new species liquid fuel gasification research furnace of the Foundation. At a temperature below 1370°C, the first expression, derived from the gasification tests on the oil emulsion was used while the second expression, derived from the gasification tests on the residual oil was used at temperatures at and above 1370°C. The ratio of heat loss was determined on the basis of the outlet temperature of the gasifier 7, and, from those expressions, and further, correction was made by taking into account the ratio of the wall surface area of the gasifier 7 to the heat input quantity. As a result, the effect of scaling up the gasifier 7 can be taken into account.

At a temperature below 1370°C:

the ratio of heat loss (%) = 3.7666 x $10^{-34}$ x gasifier outlet temperature (°C)$^{10.836}$

At a temperature not lower than 1370°C:

the ratio of heat loss (%) = - 2.97 x $10^{-5}$ x gasifier outlet temperature (°C)$^2$ + 9.545 $\times$ $10^{-2}$ x gasifier outlet temperature (°C) - 71.35

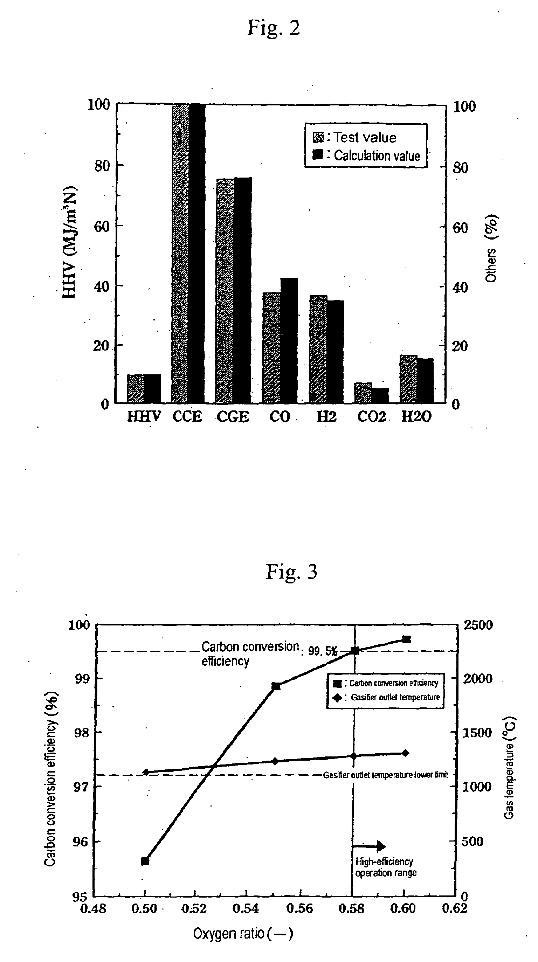

In order to check the accuracy of the calculation technique, comparison thereof with results of the gasification tests on the oil emulsion, conducted by the Foundation, was made. FIG. 2 shows comparison of test values with calculation values at an oxygen ratio ([) of 0.40 after about 5 seconds of retention time in the furnace, when the gasifying reaction in the test was determined nearly completed. For the reaction rate constants, values measured at the PDTF of the Foundation were adopted.

In FIG. 2, as to various gasifying performances of generated gas heating value (HHV: higher heating value), carbon conversion efficiency (CCE), and cold gas efficiency (CGE), the test values and calculation values were found to be in substantial agreement with each other. A slight difference was found between the respective properties of various gases. However, since the concentration of CO combined with $H_2$, which are combustible components, substantially agrees with that of the test value, both the values of the cold gas efficiency substantially agree with each other. That is presumably because most of the C in volatile matter of the fuel is assumed to turn into CO immediately after being charged into the gasifier 7, so that CO concentration is calculated at a somewhat higher value.

It has turned out that CO is calculated at a somewhat higher value in concentration, as described above, and other components are calculated at somewhat lower value, but the carbon conversion efficiency indicating gasification efficiency, and the cold gas efficiency, will be at satisfactory values from the viewpoint of predicting gasifying performance.

A process of gasifying cedar chips as an example of biomass at a high efficiency was reviewed by use of the calculation techniques as established. In reviewing, particular attention was paid to the following points.

gas temperature at the outlet of the high-temperature gasification part (combustor) 8 (in the case of a two-stage type gasifier)... to be considered from the viewpoint of heat resistance (not higher than 2000°C) of the combustor wall, and discharge of molten ash (not lower than 1600°C)

gas temperature at the outlet of the gasifier 7 ... to be considered from the viewpoint of tar generation (not lower than 1100°C)

the carbon conversion efficiency... to be considered from the viewpoint of high efficiency utilization of the fuel without a recycling facility (not less than 99.5%: the cold gas efficiency at not less than 75)

Table 3 shows the properties of the cedar chips used for review. Because the ash content in the cedar chips is in a trace amount (0.09%), it was assumed that the ash was discharged as fly ash downstream instead of being slagged and molten inside the gasifier 7 for subsequent discharge. For the gasifying reaction rate constants, use was made of the values for cedar barks as shown in Table 2.

TABLE 3

| C | H | O | N | S | Cl | fixed carbon | ash | water |
|---|---|---|---|---|---|---|---|---|
| 30.45 | 3.71 | 25.68 | 0.06 | 0.01 | <0.01 | 6.07 | 0.09 | 40 |
| (* assumed melting point of ash: 1600°C) | | | | | | | | |

One-stage entrained flow process

First, with respect to a one-stage entrained flow process using a simple construction, the optimum operation condition was reviewed in the cases of oxygen-blown and air-blown types, respectively. A condition was sought under which temperature at the outlet of the gasifier is not lower than 1100°C in order to deter formation of tar, and the carbon conversion efficiency is not less than 99.5% from the viewpoint of high gasification efficiency. The review was conducted under the following conditions.

pressure inside the gasifier was atmospheric pressure, and gasifier capacity was 100 t/d.

retention time inside the gasifier was about 5 seconds when the gasifying reaction in the test was determined nearly completed.

Oxygen-blown type one-stage entrained flow process

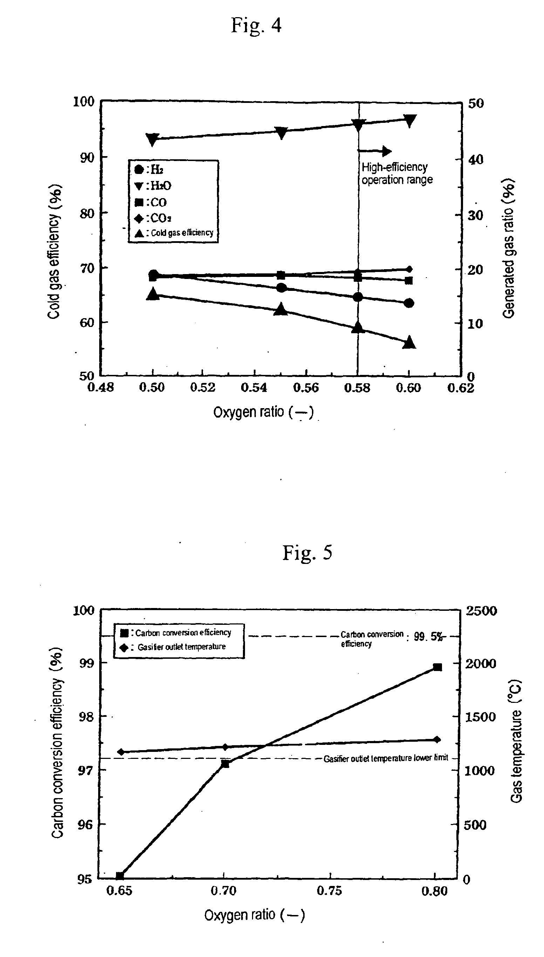

FIGs. 3 and 4 show results of the review with the oxygen-blown type. As oxygen fed from an oxygen production unit is generally 95% in concentration, it was assumed that oxygen concentration in the gasifying agent was 95%, and that the 5% balance was nitrogen. The input temperature of the gasifying agent was 50°C. It was predicted from calculation results that high efficiency operation with the carbon conversion efficiency at not less than 99.5% was feasible in an oxygen ratio range exceeding 0.58. In general, biomass is high in O content of fuel, so that the heating value thereof is low as compared with fossil fuel. Consequently, calculation showed that operation at a high oxygen ratio exceeding 0.58 was required in spite of the oxygen-blown type in order to implement operation with the temperature inside the gasifier 7, kept sufficiently high. In this case, the cold gas efficiency, as another index of high efficiency operation, was 58.9%, and the generated gas heating value became as low as about 1000 kcal / $m^3$ N.

Air-blown type one-stage entrained flow process

Fig. 5 shows results of the calculation of the carbon conversion efficiency, and gas temperature at the outlet of the gasifier in the case of the air-blown type. The air input temperature was 250°C. In comparison with the case of the oxygen-blown type, both the carbon conversion efficiency, and gas temperature undergo deterioration in operation at the same oxygen ratio because the amount of nitrogen increases by about 70 times (percentage of nitrogen in the gasifying agent: 5% → 79%) in operation at the same oxygen ratio. Consequently, it was found impossible to attain a carbon conversion efficiency in excess of 99%, even with the oxygen ratio at 0.80. Therefore, it was deemed difficult to execute air-blown gasification with the one-stage entrained flow process.

Carbonizing-gasifying process

A review was conducted on a process in which, in order to gasify biomass having a high water content before being charged into the gasifier 7, the fuel was decomposed, by a pretreatment process inside the carbonization chamber 2, into the carbonized material 4, composed mainly of fixed carbon, volatile pyrolysis gas 3 containing water, and volatile matter in the fuel.

The biomass fuel is fed to the carbonization chamber 2, and is carbonized at 600°C for a sufficient length of time.

For carbonization, use can be made of high-temperature exhaust gas from a process downstream of the gasifier 7. The water content, and volatile matter are discharged out of the upper part of the carbonization chamber 2 during carbonization, and after sufficient carbonization, the carbonized material 4, containing fixed carbon, ash, and a little volatile matter, is discharged from the carbonization chamber 2. Thus, the carbonized material 4 and the pyrolysis gas (volatile gas) 3, in the carbonization chamber 2, are fed to the gasifier 7 via different paths. There is the need to review how to feed the gasifier 7 with the carbonized material 4 and the pyrolysis gas 3 in order to determine the optimum operation conditions for gasification.

In reviewing the optimum process, volatilization characteristics of cedar chips were measured to determine to what extent volatile matter in the cedar chips would undergo volatilization. As a result, it was determined that 92.6% of the volatile matter was volatilized at 600°C. Accordingly, it was assumed that the carbonized material 4 contained 7.4% of the volatile matter in addition to fixed carbon and ash.

One-stage charge process

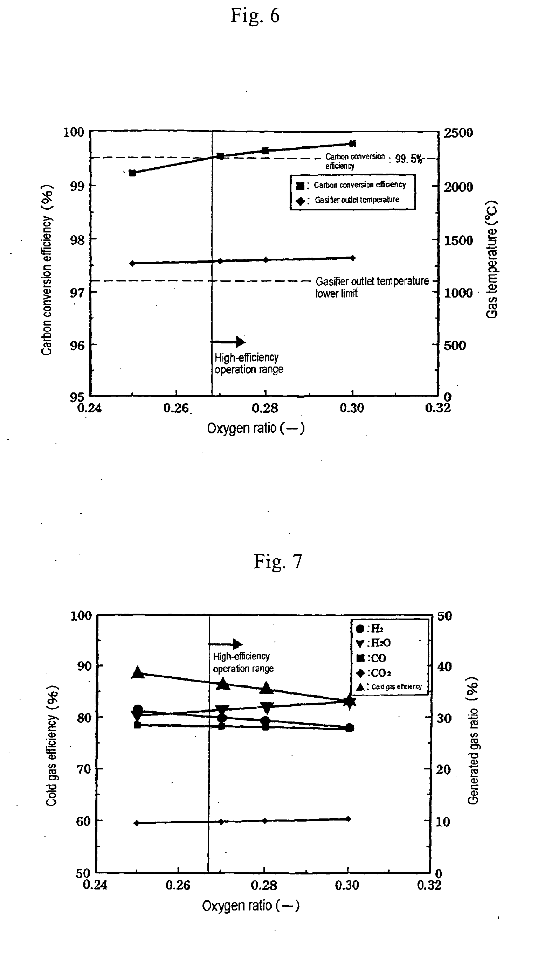

First, a review was conducted on the one-stage charge process in which both the carbonized material 4, and the volatile pyrolysis gas 3, separated in the carbonization chamber 2, are charged into the high-temperature gasification part 8 only. In this case, review was conducted on the efficiency of a gasifier alone excluding the carbonization chamber 2. As with the case of reviewing the one-stage, entrained flow, gasifier, the review was conducted under conditions that the pressure inside the gasifier was atmospheric pressure, the gasifier capacity was 100 t / d, the retention time inside the gasifier was 5 seconds, and the oxygen concentration in the gasifying agent was 95%. FIGs. 6 and 7 show results of calculation.

In this case, the input temperature rose to 600°C because the biomass fuel 1 was subjected to pretreatment in the carbonization chamber 2, and gas temperature inside the gasifier 7 rose due to lack of latent heat because the water content was fed as vapor, so that the gasifying performances, such as the carbon conversion efficiency, cold gas efficiency, and so forth, are enhanced on the basis of the same oxygen ratio in comparison with the one-stage entrained flow gasifier. (Refer to FIGs. 3 and 4). It was found from calculation that the carbon conversion efficiency was at not less than 99.5% in a range of the oxygen ratio exceeding 0.27, and the cold gas efficiency at that time was at a high value in excess of 85%.

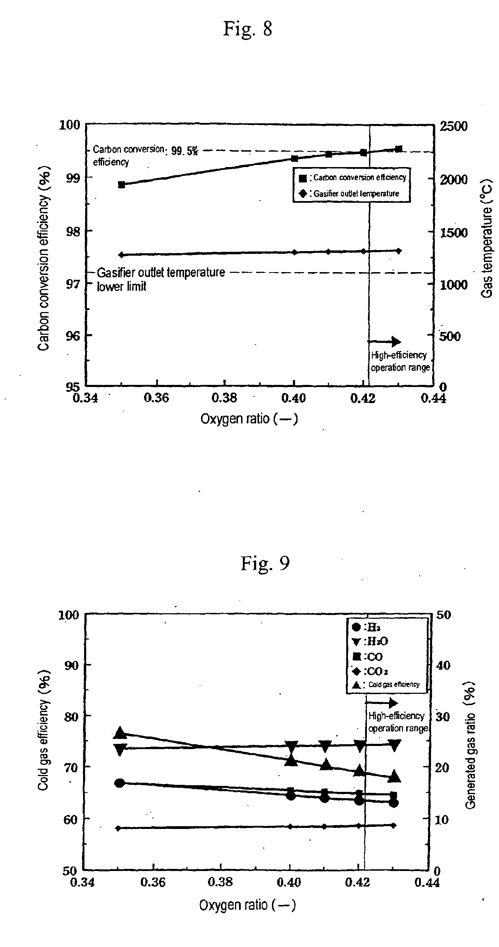

Next, review was conducted with the air-blown type. For comparison with the case of the one-stage entrained flow gasifier, the air input temperature was 250°C. FIGs. 8 and 9 show the results of calculation. As in the case of the oxygen-blown type, the rise in gas temperature inside the gasifier 7 is accompanied by enhancement in carbon conversion efficiency, and cold gas efficiency in operation, at the same oxygen ratio as compared with the one-stage, entrained flow, gasifier, thereby enabling high efficiency operation even with the air-blown type. Calculation results showed that high efficiency operation, with the carbon conversion efficiency at not less than 99.5%, was feasible with an oxygen ratio not less than 0.43. However, the cold gas efficiency in this case was 67.8%, and the generated gas heating value became as low as about 840 kcal / m$^3$ N.

Two-stage charge process

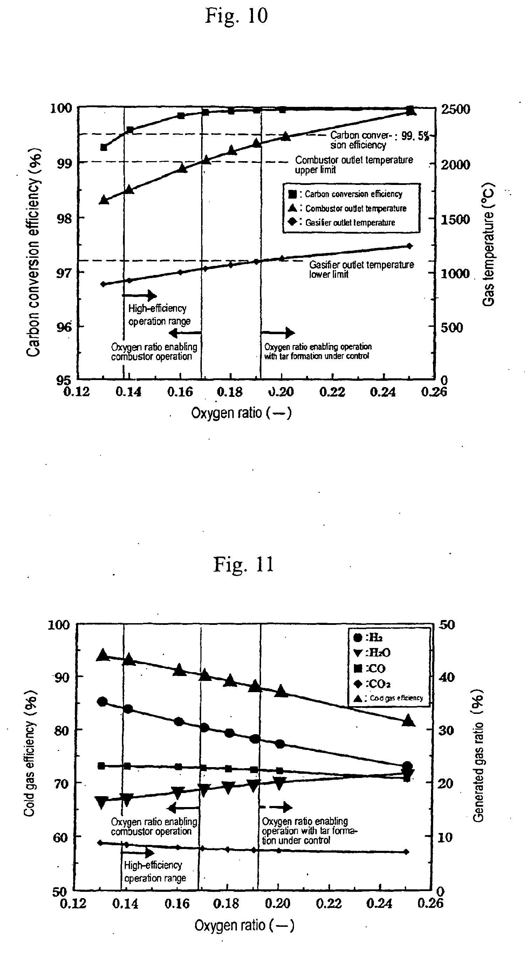

Next, a review was conducted on the two-stage charge process in which the carbonized material 4 separated in the carbonization chamber 2 is charged into the high-temperature gasification part 8, and the volatile pyrolysis gas 3 is charged into the gas reformer (reductor) 7. The gasifying agent 5 was charged into the high-temperature gasification part 8 only, whereupon a high temperature combustion zone was formed in the high-temperature gasification part 8 due to reaction taking place between the carbonized material 4 and the gasifying agent 5, while the gas reforming reaction was based mainly on a shift reaction proceeding in the gas reformer 9 due to water content and volatile matter charged into the gas reformer 9. FIGs. 10 and 11 show results of calculation. The retention time was set to 3 seconds inside the high-temperature gasification part 8, and to 1 second inside the gas reformer 9. In this case, it was deemed difficult to execute oxygen-blown operation for the following reasons. First, the high-temperature gasification part 8 is turned into the high temperature combustion zone at a temperature in excess of 3000°C. Secondly, the quantity of the volatile gas fed from the carbonization chamber 2 is large in relation to the flow rate of gas from the high-temperature gasification part 8 to the gas reformer 9, and a rapid drop in temperature occurs inside the gas reformer 9, thereby rendering it impossible to keep the temperature at the outlet of the gasifier at a level of at least 1100°C. Accordingly, the review was conducted only on the case of the air-blown type.

It was expected from FIGs. 10 and 11 that high efficiency operation with a carbon conversion efficiency not less than 99.5% was already feasible in operation with an ultra-low oxygen ratio at 0.14. At this point in time, the oxygen ratio of the high-temperature gasification part 8 alone was 0.56. However, the temperature at the outlet of the gasifier was about 900°C, a temperature at which there was a concern about formation of tar. Meanwhile, the temperature at the outlet of the gasifier reaches 1100°C with an oxygen ratio at 0.20, and, at this point in time, the temperature at the outlet of the high-temperature gasification part 8 was calculated at 2200°C, and this was deemed to represent an inoperable oxygen ratio condition when the heat resistance of the furnace wall is taken into account.

Based on calculation, the temperature at the outlet of the high-temperature gasification part 8 is expected to exceed 2000°C at an oxygen ratio 0.17, and, at that time, the temperature at the outlet of the gasifier is 1030°C, which below 1100°C, the temperature regarded as a guide for stable operation. That is because, in relation to the flow rate of the gas from the high-temperature gasification part 8 at about 2300 $m^3$ N/h, the flow rate of the volatile gas fed from the carbonization chamber 2 to the gas reformer 9 is about 5400 $m^3$ N/h, equivalent to nearly 2.5 times as much as the former, so that the temperature of the gas from the high-temperature gasification part 8, at about 2000°C, is rapidly lowered. Accordingly it was deemed difficult to implement stable operation with this process when the temperature at the outlet of the high-temperature gasification part 8, and the temperature at the outlet of the gasifier 7 are taken into account.

Process of air charge to the gas reformer (reductor)

With the two-stage charge process, high carbon conversion efficiency is obtainable in operation at a low oxygen ratio in comparison with the one-stage, entrained flow, process and the one-step charge process, so that the two-stage charge process is considered to be an effective process when high efficiency operation is desired. Accordingly, a review was conducted on a process in which air 6 is charged into the gas reformer 9, and CO and $H_2$, which are the combustible gas from the high-temperature gasification part 8, are caused to undergo combustion, thereby raising the gas temperature inside the gas reformer 9 in order to raise the temperature at the outlet of the gasifier to not lower than 1100°C while keeping the temperature at the outlet of the high-temperature gasification part 8 at a level not higher than 2000°C.

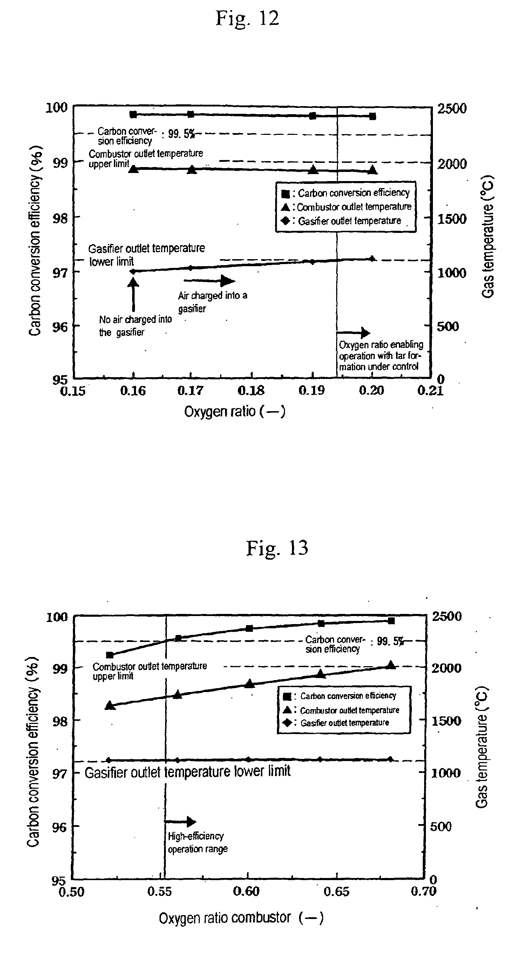

Because it is necessary to operate with an oxygen ratio at not more than 0.16 (combustor oxygen ratio at more than 0.64) in order to prevent the temperature at the outlet of the high-temperature gasification part 8 from going higher than 2000°C, as shown in Fig. 10, it was decided to increase the overall oxygen ratio, with the combustor oxygen ratio fixed at 0.64. Fig. 12 shows the results of calculation of the carbon conversion efficiency, and gas temperature.

The results of the calculation show that it was possible to raise the temperature at the outlet of the gasifier to a level of at least 1100°C with the overall oxygen ratio not less than 0.20. When compared with the one-stage charge process as show in FIGs. 6 and 7, it was evident that high efficiency operation was feasible at a still lower oxygen ratio. In this case, a carbon conversion efficiency of 99.8%, and a cold gas efficiency at a high value exceeding 85%, were obtained.

It has turned out that a process in which the carbonized material 4 from the carbonization chamber 2 is charged into the high-temperature gasification part 8, the volatile pyrolysis gas 3 is charged into the gas reformer 9, the combustor oxygen ratio is set low in order to render the heat load on the furnace wall of the high-temperature gasification part 8 as low as possible, and further, the air 6 is charged into the gas reformer 9 such that the temperature at the outlet of the gasifier 7 at the suitable temperature (not lower than 1100°C), is suitable for the case where cedar chips are used in the carbonizing-gasifying process.

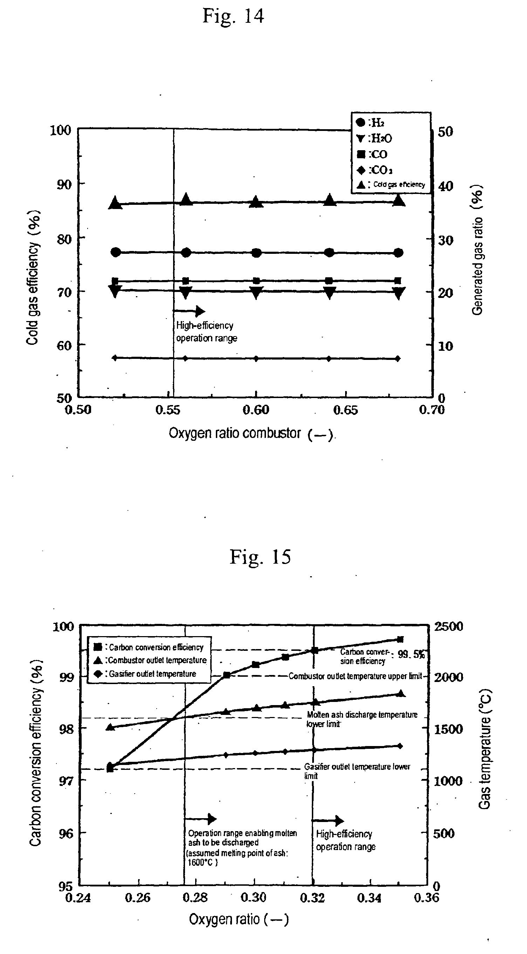

Next, in order to conduct a review on the effect of the combustor oxygen ratio, variation in gasifying performance was sought after with the overall oxygen ratio kept constant at 0.20. FIGs. 13 and 14 show the results of the review. When the combustor oxygen ratio was lowered without varying the overall oxygen ratio, it was observed that there was little change in the temperature at the outlet of the gasifier, while there was a tendency for the temperature at the outlet of the combustor, and the carbon conversion efficiency, to become lower. The combustor oxygen ratio is preferably as low as possible when the heat load on the furnace wall is considered, and it was expected from FIGS. 13 and 14 that gasifying performance with the carbon conversion efficiency, as an index of high efficiency operation, at not less than 99.5%, was obtainable with the combustor oxygen ratio at not less than 0.56.

It was expected from the results described above, that the conditions under which the gas temperature inside the combustor can be rendered as low as possible, when the combustor oxygen ratio is at 0.56, that is, the oxygen ratio enabling high efficiency operation, and the overall oxygen ratio is at 0.20, would represent the optimum operation conditions when using cedar chips.

Review on waste gasifying process

A review was conducted on a high-efficiency waste gasifying process using waste as fuel instead of cedar chips. The waste used was typical municipal solid waste, and the property thereof is shown in Table 4. Since several percent of ash is contained in the waste, in contrast with the cedar chips so far reviewed, the review was conducted on the assumption that the ash is melted in the gasifier 7 in order to be discharged as slag. As measured data on the melting point of the ash are unavailable, the melting point was assumed to be 1600°C.

TABLE 4

| item content (%) | C | H | O | N | S | Cl | ash | water content | fixed carbon |
|---|---|---|---|---|---|---|---|---|---|
| wood chip 30,0 | 4.4 | 5.6 | 29.7 | 0.1 | 0.1 | 0.1 | 5.0 | 15.0 | 13.0 |
| waste paper 15.0 | 38.2 | 5.4 | 35.9 | 0.4 | 0.0 | 0.1 | 5.0 | 15.0 | 8.9 |
| waste fiber 15.0 | 40.2 | 5.8 | 30.7 | 3.1 | 0.1 | 0.1 | 5.0 | 15.0 | 21.2 |
| waste plastics 19.0 | 72.0 | 8.6 | 7.2 | 4.8 | 0.5 | 2.9 | 2.0 | 2.0 | 2.0 |
| waste PVC 1.0 | 30.7 | 3.8 | 0.0 | 0.0 | 0.0 | 45.5 | 12.0 | 8.0 | 9.9 |
| waste rubber 0.1 | 85.5 | 7.6 | 0.0 | 0.5 | 1.4 | 0.0 | 1.04 | 5.0 | 5.5 |
| garbage 10.0 | 21.2 | 2.7 | 14.1 | 0.0 | 0.0 | 0.0 | 1.02 | 60.0 | 6.4 |
| sludge 9.9 | 1.5 | 0.2 | 1.1 | 0.2 | 0.0 | 0.0 | 17.0 | 80.0 | 1.5 |
| Total 100.0 | 41.4 | 5.3 | 21.8 | 1.5 | 0.1 | 1.1 | 5.4 | 23.4 | 9.8 |
| * assumed melting point of ash: 1600°C | | | | | | | | | |

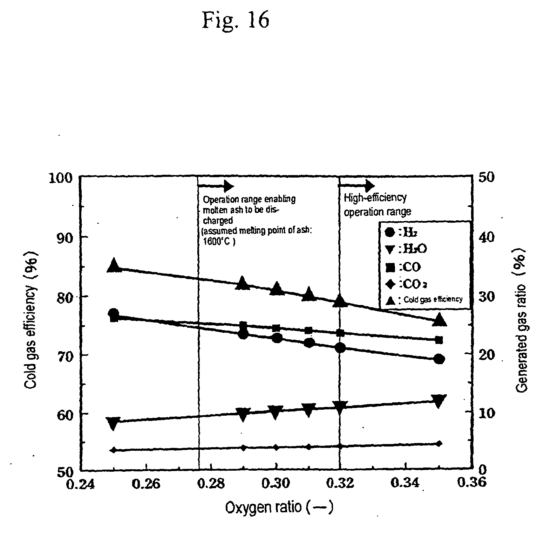

As a result of the review using the cedar chips, it was determined that high efficiency operation was feasible with the use of the carbonizing-gasifying process, for charging the carbonized material 4 into the high-temperature gasification part 8, and the volatile pyrolysis gas 3 into the gas reformer 9, so that review was first conducted on the case of charging air as the gasifying agent 5 into the high-temperature gasification part 8 only. FIGs. 15 and 16 show results of calculation. Fuel throughput was set to 100 t/d as with the case with cedar chips. However, as for the volatilization ratio in the carbonization chamber 2, proportions by weight of the carbonized material 4 to the pyrolysis gas 3 were set to 40 : 60 by use of measured values obtained when carbonization was actually carried out at Okadora Co. Ltd., the manufacturer of carbonizers.

In comparison with the case of the cedar chips (Refer to FIGs. 10 and 11), a rapid drop in gas temperature in the gas reformer 9 is not observed, because the volatilization ratio in the carbonization chamber 2 decreased. Furthermore, a combustor oxygen ratio in relation to an overall oxygen ratio became lower because the quantity of the carbonized material 4 charged into the high-temperature gasification part 8 increased. It was determined from the foregoing that no super-high temperature region was formed in the high-temperature gasification part 8, and there existed an oxygen ratio condition at which the combustor temperature was not higher than 2000°C, and the gas temperature at the outlet of the gasifier was not lower than 1100°C, a temperature regarded within the stable operation range. Based on calculation, the carbon conversion efficiency was expected to be at not less than 99.5%, with the overall oxygen ratio at not less than 0.32. In this case, a value exceeding 75% was obtained for the cold gas efficiency, which is the target value.

Furthermore, since, with the overall oxygen ratio at not less than 0.32, the temperature at the outlet of the high-temperature gasification part 8 is at not lower than 1600°C, it is deemed that ash contained in the waste used in the review can be satisfactorily melted and discharged from the high-temperature gasification part 8 of the gasifier.

Conclusion

Having established the calculation techniques for gasifying performance prediction, based on the gasifying reaction rates found by use of the properties of fuels, and the thermobalance as well as PDTF of the Foundation, the following results were obtained after the review conducted on the gasifying process suitable for a biomass consisting of cedar chips having a 40% water content, and waste (the typical municipal solid waste), and on high-efficiency and stable operation conditions.

In the case of the cedar chips, high-efficiency operation is difficult to execute with the air-blown, one-stage, entrained flow process where fuel is directly charged into the gasifier 7. However, with adoption of the carbonizing-gasifying process whereby the fuel is decomposed into carbonized material 4, and pyrolysis gas 3 containing water, by the use of the carbonization chamber 2, and subsequently charged into the gasifier 7 in two stages, highly efficient and stable operation is feasible.

With the carbonizing-gasifying process, in the case where a volatilization ratio is high, as with cedar chips, in order to keep the temperature at the outlet of the gasifier 7 at a temperature sufficient to deter the formation of tar (1100°C), it is essential to charge air or oxygen 6 into the gas reformer 9.

Since the waste contains much ash, there is a need for melting the ash to be discharged as slag from the viewpoint of environmental conservation. Because of a low volatilization ratio in the waste, a high-efficiency and molten-ash discharging operation is feasible by adoption of a process for charging air into the high-temperature gasification part 8 only of a two-stage gasifier.

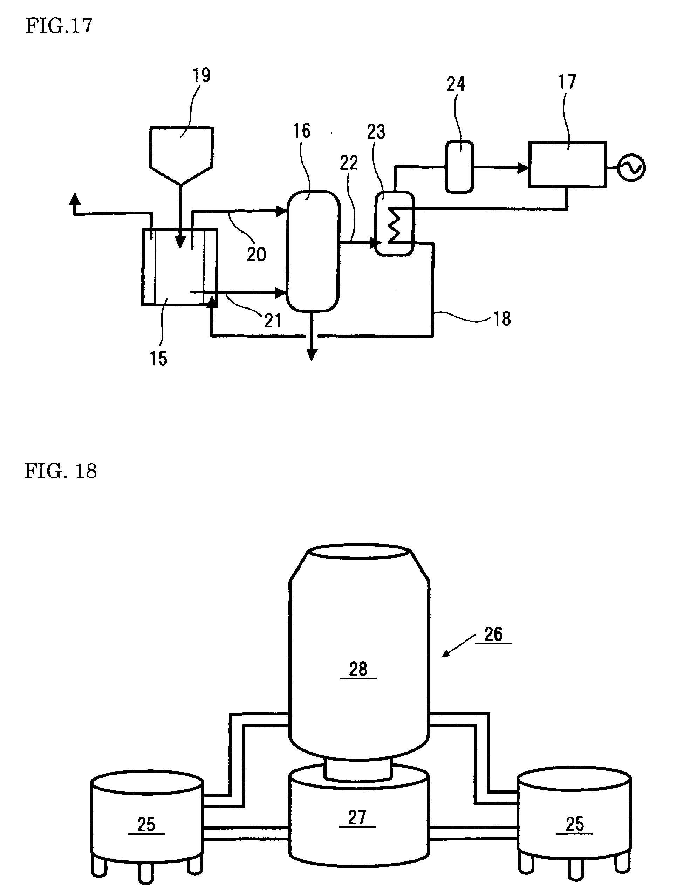

FIGs. 17 and 18 show another aspect of the invention, in which power is generated from biomass. The biomass power generation system comprising a carbonizer 15 capable of pyrolytically decomposing and carbonizing not only wood-based biomass, but also waste-based biomass, such as municipal solid waste and the like, a gasifier 16 for carrying out combustion and gasification of char produced in the carbonizer 15, and a generator set 17, operable on the gas generated in the gasifier 16 as a source of energy, for generating electric power. The generator set emits exhaust heat, which, as will be seen, is utilized in the operation of the carbonizer.

The carbonizer 15 can be identical to the carbonizer 2 in FIG. 1, having an internal chamber for receiving biomass, surrounded by a jacket for receiving hot gas as a source of heat for pyrolytic decomposition and carbonization of the biomass within the internal chamber. The jacket of the carbonizer 15 is connected to the generator set 17 via an exhaust gas feed path 18 for directly receiving the supply of the exhaust gas emitted by the generator set 17, so that the system achieves high thermal efficiency through effective utilization of the heat of the exhaust gas. The jacket of the carbonization chamber 15 is in the shape of a vertical annular cylinder, and the exhaust gas at a high temperature, for example 600°C, is introduced into the jacket for carbonization by external heating. The cylindrical inner part of the carbonizer may be provided with rotor blades (not shown), and the fuel may be pressed against the inner wall of the carbonization chamber by rotating the rotor blades, thereby enhancing heat conduction, and improvement of carbonization efficiency. A carbonization chamber 15 suitable for use in carrying out the present embodiment can be, for example, a super-high speed carbonizer manufactured by Okadora Co. Ltd. However, various forms of carbonization chambers are suitable. For example, an externally heated, cylindrical, rotary kiln may be used.

With the carbonization chamber 15 having the above-described construction, high-quality char, that is, a carbonized fuel with little water content and high in heating value, can be produced. The exhaust gas, after releasing heat to the biomass fuel, is emitted through a smokestack. That is, the carbonization chamber 15 utilizes system exhaust heat from the generator set 6 as a heat source, via the exhaust gas feed path 18, for indirect pyrolytic decomposition of the biomass fuel. The time required for pyrolysis varies depending on the kind of biomass supplied as raw material, and the water content in the biomass. In most cases, however, when exhaust gas at around 600°C is utilized, carbonization can be implemented in about 30 minutes to one hour.

Plural chambers may be provided for carbonization, and operated in rotation in time sequence, thereby continuously feeding the char and pyrolysis gas to the gasifier 16. The carbonizing process inside the carbonization chambers entails some variation with respect to the amount of vaporization. However, if the plural units of the carbonizer are operated in rotation, the effects of such variation can be alleviated.

A raw material bunker 19 is connected to the carbonizer for charging biomass as fuel into the carbonizer 15. Raw material consisting of wood-based biomass, or raw material consisting of a of mixture of wood-based biomass, and waste-based biomass, may be first fed into the raw material bunker 19, and then sequentially supplied to the carbonization chambers of a plural chamber carbonizer.

The gasifier 16 is a furnace for carrying out combustion and gasification of the char produced in the carbonization chamber 15, reforming a combustible pyrolysis gas containing tar, volatilized during carbonization, and converting ash in the fuel into molten slag. The gasifier may be installed as a single furnace in the biomass power generation system. However, in the case of a large scale biomass power generation system, e.g., a plant with capacity in excess of, for example, 50 megawatts, plural gasifier units may be connected with one another through gas turbines, the number of units and the construction thereof depending on the mode and scale of the system.

The temperature at the outlet of the gasifier 16 is dependent on the heating value as well as the quantity of the char, and the quantity of input air. For example, the temperature in the lower part of the furnace may reach a level as high as 1500°C in some cases because a relatively large quantity of air, corresponding to the heating value and the quantity of char, is introduced into the gasifier, because the char and pyrolysis gas at a temperature of at least about 600°C are charged into the gasifier 16, because the water content in the biomass fuel is turned into steam at 600°C before being into the gasifier, and because high-quality char (that is, a char high in heating value and containing little water) is used as fuel. Thus, with the biomass power generation system according to the invention, wherein the in-furnace temperature of the gasifier 16 reaches 1100°C, which is the decomposition temperature of tar, or a temperature higher than that, and the pyrolysis gas containing tar, having volatilized at the time of carbonization in the carbonization chamber 15, is subjected to reformation in the upper part (the gas reformer) of the gasifier 16. Because the tar contained in the pyrolysis gas undergoes decomposition under the high-temperature condition created by utilization of high heat in the lower part (the gasification/melting part) of the furnace, it is possible to avoid adhesion of the tar to piping, and the like. Thus, the gasifier 16 according to the invention executes high-temperature combustion in the lower part of the furnace, thereby melting the ash in the fuel, and, at the same time, executes reformation of the pyrolysis gas in the upper part of the furnace by utilizing heat generated in the lower part thereof, thereby fulfilling two functions with a single unit. 1100°C represents a preferable temperature from the viewpoint of reliably deterring formation of tar, but the formation of the tar can be deterred even at a temperature lower than 1100°C. However, in contrast to the conventional system, using, for example a fluidized-bed furnace, and a fixed bed furnace, incapable of operating in such a temperature zone, the biomass power generation system according to the present embodiment has the feature in that the in-furnace temperature is enabled to reach 1100°C, or higher because of the particular structure of the gasifier.

In addition, with the gasifier 16, because a high in-furnace temperature is attained, not only can the tar in the pyrolysis gas be decomposed, but also, even the ash in the tar can be melted at a high temperature and converted into slag.

If waste-based biomass is mixed with wood-based biomass to be burned, this will result in a good possibility that the ash contains heavy metals. However, if the ash can be melted and converted to slag, it is possible to discharge the ash in a condition where there is no risk of elution of heavy metals, or such a small risk that there is no need for taking particular countermeasures against elution of the constituents of the ash.

A tar - pyrolysis gas feed path 20, and a char feed path 21 are provided between the gasifier 16 and the carbonization chambers 15. The former, namely, the tar - pyrolysis gas feed path 20 is a flow path for feeding the tar and pyrolysis gas, generated in the carbonization chambers 15, into the gasifier 16, and the latter, namely, the char feed path 21, is a flow path for feeding char generated in the same carbonization chambers 15, into the gasifier 16. For example, with the present embodiment, the char feed path 21, making use of a screw conveyer, for example, is connected to the lower part of the carbonization chambers 15, thereby carrying out combustion and gasification by using the char as the fuel, so that the temperature in the lower part of the furnace in particular, is raised to a high temperature, whereupon there is generated a high-temperature gas at a temperature not less than 1100°C, or not less than 1500°C in some cases, by feeding air into the lower part of the furnace. Meanwhile, gas reformation is carried out in the upper part of the furnace, and tar, pyrolytically decomposed partially in the carbonizer 15, is decomposed in the upper part of the furnace, by the use of the high-temperature gas as a heat source. The gas generated in the gasifier 16, is delivered as a heat source via a generated gas feed path 22 to the generator set 17 in a subsequent stage.

In this case, although the generated gas can be directly delivered to the generator set 17 via the generated gas feed path 22, heat exchange between the generated gas and the exhaust gas from the generator set 17 is preferably carried out. This can entail transfer of heat from the generated gas to the exhaust gas from the generator set 17, so that the exhaust gas fed to the carbonizer 15, serving as a heat source, can be rendered higher in temperature, thereby enabling higher thermal efficiency to be attained. For example, in the embodiment shown in FIG. 17, , a generated gas heat exchanger 23 is installed in such a way as to cause the generated gas feed path 22 to intersect the exhaust gas feed path 18 at some midpoint, or to be in close proximity thereto. The gas generated in the gasifier 16 loses its heat in the heat exchanger 23, and is thereby cooled, and is subsequently delivered to the generator set 17 after dust, sulfur, and other contaminants contained in the gas are removed in a gas purifier 24 installed between the heat exchanger 23 and the generator set 17.

The generator set 17 is operated by the gas generated in the gasifier 16 for generating electric power. It also sends out exhaust heat to the carbonizer via the exhaust gas feed path 18. In this case, the exhaust gas feed path 18 may be directly connected to the carbonization chamber 15. However, in the illustrated embodiment, the generated gas heat exchanger 23 is installed at an intermediate point along the exhaust gas feed path 18 so as to enable heat exchange to be effected between the gas generated in the gasifier 16 and the exhaust gas from the generator set 17. It follows that the heat of the exhaust gas from the generator set 17, and also the heat from the generated gas from the gasifier 16 are recovered for utilization in the carbonizer, thereby enabling higher thermal efficiency for the system as a whole to be attained. it is possible to adopt other modes such as, for example, a mode in which the exhaust heat is utilized through the medium of steam after heat exchange with the exhaust gas.

In the embodiment shown in FIG. 18, plural carbonization chambers 25 are disposed around a single gasifier 26 having a high temperature gasification part 27 and a gas reformer 28. These carbonization chambers are operated in rotation in order to provide a continuous supply of char and pyrolysis gas to the gasifier 26. That is, carbonization takes place in a first one of the carbonization chambers 25, and pyrolysis gas is fed from the first carbonization chamber to the gas reformer 28 while char is fed from a second carbonization chamber to the high temperature gasification part 27 of the gasifier. Thereafter, the second carbonization chamber is recharged with biomass, and the functions of the carbonization chambers are interchanged so that char is fed from the first chamber while carbonization takes place in the second chamber and pyrolysis gas is fed from the second chamber to the gas reformer. More than two carbonization chambers can, of course, be associated with a single gasifier, and operated in appropriate time sequence.

As described hereinbefore, the biomass power generation system implements high-efficiency power generation, without the use of a supplementary fuel, by integrating a carbonizing process utilizing exhaust heat of the system, with a gasifying process. We have estimated that there is a good likelihood that, with the biomass power generation system according to the invention, it is possible to achieve a thermal efficiency at 34%, which is in excess of 30%, the target value of thermal efficiency (in the case of a 100 t/d scale) for "Biomass Nippon Comprehensive Strategy," as mentioned below. More specifically, with the biomass power generation system according to the embodiment of FIG. 17, having achieved effective utilization of the exhaust heat of the exhaust gas accompanying power generation, by systematizing the carbonization chamber 15, and the generator set 17, it is possible to achieve a thermal efficiency higher than that in the conventional case, and to pyrolytically decompose and carbonize not only wood-based biomass, but also waste-based biomass, such as municipal solid waste, and so forth, without use of supplementary fuel. In other words, since the wood-based biomass is higher in water content than the waste-based biomass, it has been difficult to convert both biomasses in a mixed condition into a fuel having stable properties. However, in the case of the biomass power generation system according to the present embodiment, with the carbonization chamber 15, capable of effectively utilizing the exhaust heat, provided at a front stage of the system, it is possible to cause both biomasses in the mixed condition, in a sense, heterogeneous fuels, to be dried in the carbonizing process and subsequently converted into a fuel having stable properties, containing a given water content (for example, about 1%), and pulverizable if required. Furthermore, in contrast to the presently-available power generation system of 1 megawatt scale, based on, for example, combustion in the boiler thereof wherein power generation efficiency has been on the order of only 10% at most, with the biomass power generation system according to the invention, a power generation efficiency of 30% or better can be achieved.

"Biomass Nippon Comprehensive Strategy" is a strategy for promotion of utilization of biomass, arranged jointly by the Japanese Ministry of Agriculture, Forestry, and Fisheries, the Ministry of Economy, Trade, and Industry, the Ministry of Land, Infrastructure, and Transportation, the Ministry of the Environment, and the Ministry of Education, and decided upon at the cabinet meeting in December, 2002. In "Biomass Nippon Comprehensive Strategy", dated Dec. 12, 2002, for example, p. 12, there is a description to the effect that in connection with the technology of a direct combustion and gasification plant, and so on, for converting biomass low in water content into energy, a technology is to be developed whereby energy conversion efficiency on the order of 20% in terms of electric power, or on the order of 80% in terms of heat, can be implemented at a plant (assumed on a several-municipalities scale) with biomass throughput on the order of 20 t/d, or energy conversion efficiency on the order of 30% in terms of electric power, can be implemented at a plant (assumed in a municipality region) with biomass throughput on the order of 100 t/d provided that an environment suitable for collection of biomass in a wider region is established (herein, the energy conversion efficiency refers to a ratio of chemical energy (heating value) of a biomass fuel, converted into electric power). The biomass power generation system according to the present embodiment is exactly in line with the promotion of utilization of biomass, aimed at by the "Comprehensive Strategy."

The biomass power generation system according to the invention has several advantages over a conventional power generation set. First, since not only wood-based biomass, but also waste-based biomass, such as municipal solid waste, waste plastics, and the like can be utilized, wood-based biomass fuel, the availability of which is subject to seasonal variation, can be complemented by waste-based biomass, and consequently, stable power output can be obtained. Second, waste based biomass includes waste is ordinarily disposed of at a relatively high cost. However, if such waste is collected as part of the fuel for use in power generation, the economics of wood-based biomass collection can be improved. Third, the increase in the quantity of available fuel afforded by the invention makes it possible to increase the scale of power generation equipment, making high-efficiency power generation feasible. Fourth, since no dioxin is generated, and the ash is rendered harmless by conversion to molten slag, the power generation system can serve as a disposal facility for general as well as industrial wastes, and contributes to environmental conservation. Fifth, as a result of integration of the carbonizing process with the gasifying process, the raw biomass is reduced in volume to about 1/5 to 1/7 of its initial volume, so that a compact gasifier can be utilized. Finally, the system can be operated by workers with no special qualifications.

The embodiment described above is an example of preferred embodiments of the invention, however, it is to be understood that the invention is not limited thereto, and that various changes and modifications may be made in the invention without departing from the spirit and scope thereof. For example, with the embodiment described above, the municipal solid waste, waste plastics, and so forth are cited as specific examples of the waste-based biomass. However, those materials are cited merely by way of example, and with the biomass power generation system according to the invention, other biomasses may be utilized, including biomass having high water content, such as, for example, agricultural resources, forest resources, stock farming resources, and aquatic resources, wastes of those resources, building material waste, food stuff waste, sludge, and so forth, regardless of whether it is wood-based biomass, or waste-based biomass.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

**Claims**

1. A biomass carbonizing-gasifying system for pyrolytic decomposition of a biomass fuel, said biomass carbonizing-gasifying system comprising:

   a carbonization chamber for producing a carbonized material by heating the biomass fuel;
   a two-stage gasifier comprising a high-temperature gasification part for gasifying the carbonized material, and a gas reformer for reforming combustible pyrolysis gas containing tar volatilized in the production of said carbonized material, said gas reformer having an outlet;
   means for feeding carbonized material produced in the carbonization chamber to the high-temperature gasification part of the two-stage gasifier;
   a pyrolysis gas flow path for sending the combustible pyrolysis gas produced in the carbonization chamber into the gas reformer of the gasifier; and
   gasifying agent feed means for feeding a gasifying agent to the high-temperature gasification part of the gasifier, and controllably feeding a gasifying agent containing oxygen to the gas reformer, whereby the temperature at the outlet of the gasifier can be prevented from falling below a predetermined temperature.

2. The biomass carbonizing-gasifying system according to claim 1, in which said gasifying agent feed means comprises means for intermittently feeding said gasifying agent containing oxygen to said gas reformer.

3. The biomass carbonizing-gasifying system according to claim 1, in which the gasifying agent feed means comprises pipes, arranged to feed a gasifying agent containing oxygen both to said high-temperature gasification part, and to said gas reformer.

4. A biomass carbonizing-gasifying process for pyrolytic decomposition of a biomass fuel said process comprising:

   heating the biomass fuel in a carbonization chamber to produce a carbonized material and combustible pyrolysis gas containing volatilized tar;
   feeding said carbonized material to a high-temperature gasification part of a two-stage gasifier comprising a gasification part and a gas reformer, said gas reformer having an outlet;
   feeding said combustible pyrolysis gas containing volatilized tar into said gas reformer;
   feeding a gasifying agent to the high temperature gasification part of the two-stage gasifier; and
   maintaining the temperature of gas at said outlet of the gas reformer at a level above a predetermined temperature level by feeding a controlled amount of gasifying agent containing oxygen to said gas reformer.

5. The biomass carbonizing-gasifying process according to claim 4, in which the temperature of the gas at said outlet of the gas reformer is maintained at a level above said predetermined temperature level by intermittently feeding a gasifying agent containing oxygen to said gas reformer when the temperature of gas at the outlet of the gas reformer approaches said predetermined level.

6. The biomass carbonizing-gasifying process according to claim 4, in which said predetermined temperature is 1100°C.

7. A biomass power generation system comprising:

   a generator set, operated by a gaseous fuel, and releasing exhaust heat in its operation;
   a carbonizer for receiving biomass, and receiving exhaust heat released by the generator set and utilizing said exhaust heat for pyrolytically decomposing and carbonizing said biomass and producing char and pyrolysis gas containing volatilized tar; and
   a gasifier, arranged to receive said char, and said pyrolysis gas containing volatilized tar, from said carbonizer, for combustion, and gasification of said char and reforming said pyrolysis gas containing tar, thereby generating a gaseous fuel;

   in which the generator set is operated by said gaseous fuel formed by the gasifier.

8. The biomass power generation system according to claim 7, in which the gasifier is capable of decomposing the tar in said pyrolysis gas at a temperature of at least 1100°C, thereby reforming said pyrolysis gas.

9. The biomass power generation system according to claim 7, further comprising a heat exchanger arranged to transfer part of the heat of the gaseous fuel generated by the gasifier to the exhaust heat released by the generator set, whereby the heat used for carbonization of the biomass in the carbonizer comprises not only the exhaust heat from the generator set, but also heat from the gaseous fuel generated by the gasifier.

10. The biomass power generation system according to claim 8, further comprising a heat exchanger arranged to transfer part of the heat of the gaseous fuel generated by the gasifier to the exhaust heat released by the generator set, whereby the heat used for carbonization of the biomass in the carbonizer comprises not only the exhaust heat from the generator set, but also heat from the gaseous fuel generated by the gasifier.

11. The biomass power generation system according to claim 7, in which the carbonizer comprises plural carbonization chambers, alternatively operable in rotation.

12. The biomass power generation system according to claim 8, in which the carbonizer comprises plural carbonization chambers, alternatively operable in rotation.

13. The biomass power generation system according to claim 9, in which the carbonizer comprises plural carbonization chambers, alternatively operable in rotation.

14. The biomass power generation system according to claim 10, in which the carbonizer comprises plural carbonization chambers, alternatively operable in rotation.

15. The biomass power generation system according to claim 7, in which:

said gasifier is a two-stage gasifier comprising a high-temperature gasification part for gasifying the carbonized material, and a gas reformer for reforming combustible pyrolysis gas containing tar volatilized in the production of said carbonized material, said gas reformer having an outlet; and in which said system includes:

means for feeding carbonized material produced in the carbonizer to the high-temperature gasification part of the two-stage gasifier;
a pyrolysis gas flow path for sending the combustible pyrolysis gas produced in the carbonizer into the gas reformer of the gasifier; and
gasifying agent feed means for feeding a gasifying agent to the high-temperature gasification part of the gasifier, and controllably feeding a gasifying agent containing oxygen to the gas reformer, whereby the temperature at the outlet of the gasifier can be prevented from falling below a predetermined temperature.

16. A method of generating power comprising:

operating a generator set and releasing exhaust heat in the operation of the generator set;
utilizing said exhaust heat from the generator set for pyrolytically decomposing and carbonizing biomass in a carbonizer, thereby producing char and pyrolysis gas containing volatilized tar;
effecting combustion and gasification of said char, and reforming said pyrolysis gas, in a gasifier, thereby generating a gaseous fuel; and
utilizing said gaseous fuel as a fuel for operation of said generator set.

17. The method of generating power according to claim 16, in which the volatilized tar in said pyrolysis gas is reformed in said gasifiier at a temperature of at least 1100°C.

18. The method of generating power according to claim 16, in which ash from said volatilized tar is melted in said gasifier and converted into slag.

19. The method of generating power according to claim 16, in which the carbonizer comprises plural carbonization chambers, and in which said carbonization chambers are operated in rotation.

Fig. 1

Shift reaction
$$CO + H_2O \leftrightarrow CO_2 + H_2$$

CO, CO₂, H₂,
H₂O, N₂,
Fixed carbon,
ash

Gasifying reaction
$$C + CO_2 \rightarrow 2CO$$
$$C + H_2O \rightarrow CO + H_2$$

Burning reaction
$$CO + 1/2O_2 \rightarrow CO_2$$
$$H_2 + 1/2O_2 \rightarrow H_2O$$

## Fig. 2

## Fig. 3

Fig. 4

Fig. 5

Fig. 6

Fig. 7

Fig. 8

Fig. 9

Fig. 10

Fig. 11

## Fig. 12

## Fig. 13

Fig. 14

Fig. 15

Fig. 16

FIG.17

FIG. 18

**European Patent Office**

**EUROPEAN SEARCH REPORT**

Application Number

EP 05 00 6436

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 921 182 A (GIBROS PEC B.V) 9 June 1999 (1999-06-09) * abstract; figures * * paragraph [0018] * * paragraph [0023] * * page 6, line 27 - line 29 * * page 6, line 35 - line 40 * * page 6, line 47 - page 7, line 14 * ----- | 1-19 | C10J3/66 C10J3/78 |
| P,A | EP 1 510 567 A (INSTITUT FRANCAIS DU PETROLE) 2 March 2005 (2005-03-02) * abstract; figures * * column 4, line 54 - line 57 * * column 5, line 3 - line 5 * * column 5, line 17 - line 21 * * column 5, line 37 - line 40 * * column 6, line 32 - line 45 * * column 7, line 5 - line 22 * * column 8, line 3 - line 31 * ----- | 1-19 | |
| A | EP 1 312 662 A (CIRAD-FORET) 21 May 2003 (2003-05-21) * page 8, line 46 - line 52 * * column 11, line 18 - line 21 * ----- | 1-19 | TECHNICAL FIELDS SEARCHED (Int.Cl.7)  C10J |

The present search report has been drawn up for all claims

| Place of search | Date of completion of the search | Examiner |
|---|---|---|
| The Hague | 4 July 2005 | Lapeyrere, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 6436

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2005

| Patent document cited in search report | | Publication date | Patent family member(s) | | Publication date |
|---|---|---|---|---|---|
| EP 0921182 | A | 09-06-1999 | NL | 1007710 C2 | 08-06-1999 |
| | | | AU | 736172 B2 | 26-07-2001 |
| | | | AU | 9419998 A | 24-06-1999 |
| | | | CA | 2255218 A1 | 05-06-1999 |
| | | | EP | 0921182 A1 | 09-06-1999 |
| | | | JP | 11286692 A | 19-10-1999 |
| | | | NO | 985669 A | 07-06-1999 |
| | | | NZ | 333132 A | 26-05-2000 |
| | | | US | 6084139 A | 04-07-2000 |
| EP 1510567 | A | 02-03-2005 | FR | 2859216 A1 | 04-03-2005 |
| | | | EP | 1510567 A1 | 02-03-2005 |
| | | | JP | 2005068435 A | 17-03-2005 |
| EP 1312662 | A | 21-05-2003 | EP | 1312662 A2 | 21-05-2003 |

EPO FORM P0459

For more details about this annex : see Official Journal of the European Patent Office, No. 12/82